# EUROPEAN PATENT SPECIFICATION

(11) **EP 1 116 408 B1**
(45) Date of publication and mention of the grant of the patent: **25.11.2009**
(21) Application number: 99951338.5
(22) Date of filing: 20.09.1999
(51) Int. Cl.: H04W 36/14

(54) **IMPROVEMENTS IN, OR RELATING TO, COMMUNICATION SYSTEM**
VERBESSERUNGEN VON ODER IN BEZUG AUF KOMMUNIKATIONSSYSTEME
AMELIORATIONS APPORTEES OU SE RAPPORTANT A UN SYSTEME DE COMMUNICATION

(30) Priority: 22.09.1998 SE 9803235
(43) Date of publication of application: 18.07.2001
(73) Proprietor: TELIASONERA AB, 106 63 Stockholm (SE)
(72) Inventor: WINBERG, Ole, DK-2990 Nivå (DK); ALSAE, Johan, DK-Köpenhamn Ö (DK); ARNAUTOVIC, Asim, DK-2400 Köpenhamn NV (DK)
(74) Representative: Hopfgarten, Nils
(86) International application number: PCT/SE1999/001639
(87) International publication number: WO 2000/018170

(56) References cited:
- WO-A1-96/12380
- WO-A1-96/28947
- WO-A2-98/36607
- GB-A- 2 289 191
- US-A- 5 664 007

## Description

### Technical area.

The invention relates to a communication system, including two mobile communications network which are adapted for the transmission of a call from a first mobile communication network to a second mobile communication network including mobile customers with mobile stations (MS).

### Technical background.

Roaming is the cellular communication function, which allows customers to use their telephones in networks other than their own. When a customer switch on his mobile station (MS) it begins to search for the strongest frequency it can find and locks on it, and begins to read the broadcasting information. It depends, however, on the network and the telephone using the same technology (e.g. a GSM telephone in a GSM network, a NMT telephone in a NMT network).

For roaming to be possible there has to be an agreement between the two operators involved. The agreement clarifies the conditions under which visiting customers may use the network, lays down the costs for using each others networks, and the service and functions in the network which the customer can take advantage of. The operator being visited sends information daily to the home operator to enable the customer's account to be debited for the services utilised in the host network.

WO 9836607 A2 discloses a communication system having several different mobile communications networks comprising users with mobile stations. The user with his mobile station can pass on to a new network during an ongoing call without losing said ongoing call. Further, in an origination system, parameter data are received, which are transferred from a mobile station to the origination system. Further, a mobile communication device is specified for use in both an origination system and a destination system. This device comprises receiving means for receiving signals of the origination system and the destination system. Further, measuring means are specified, for measuring power of received signals of the origination system and transmitting data representative thereof to the origination system.

US-A-5 664 007 and WO 9612380 A1 each describe a communication system having several different mobile communications networks comprising users with mobile stations. The user with his mobile station can pass on to a new network during an ongoing call without losing said ongoing call.

GB-A-2 289 191 discloses a method for handover between different mobile communications network without losing an ongoing call.

WO 9628947 A1 describes a mobile communication system combining several mobile communications network which may belong to different mobile communication systems, in which mobile terminals can operate and establish a connection in several mobile communications networks.

Technical problem.
Customers that have the possibility to utilise several GSM PLMNs (international or national roaming) will today lose ongoing calls when moving from one PLMN to another.
One problem with this type of communication is that when a subscriber to the first network moves into a second networks coverage area, it happens that the call will be cut because the subscriber moves a too long distance from the sending/transmitting equipment which take care of the transmission of the call to the subscriber. For the moment, it exists no means that is able to switch an ongoing call from a first network to a second network when a subscriber is moving into another network which is operated by a different telecommunicationoperator.
It is an object of the present invention to provide a mobile communication system adapted to co-operate with one or several other networks with means for continuous transmission of digital signals from one network to another network when subscribers are, continuously talking, and the mobile station (MS) moves from a first network operated by a first telecommunicationoperator into a second network operated by a second telecommunicationoperator.

It is another object of the present invention to provide the means with functionality to co-operate with the mobile stations, so when a call is switched from one network to another network the subscriber shall be notified. The means for transfer of the call shall disturb the call which is a completely different problem according to transfer of calls in an operator owned network.

It is an another object of the invention to create billing possibilities which give the billing arrangement in one or both the co-operating network information that, and when, a transfer has been performed.

### Technical solution.

In accordance with the invention, the solution is what is stated in the claims.

### Advantages.

For the customer to an operator, there exist many advantages. For the first we mention that a call will not be closed down when the customer for example moves in to another operators network.

The customer will be notified when he comes into the other network, with perhaps other taxes for the call so he can decide if he wants to quit the call or proceed to talk.

The foregoing and other features of the present invention will be better understood from the following description with reference to the accompanying drawings, in which:

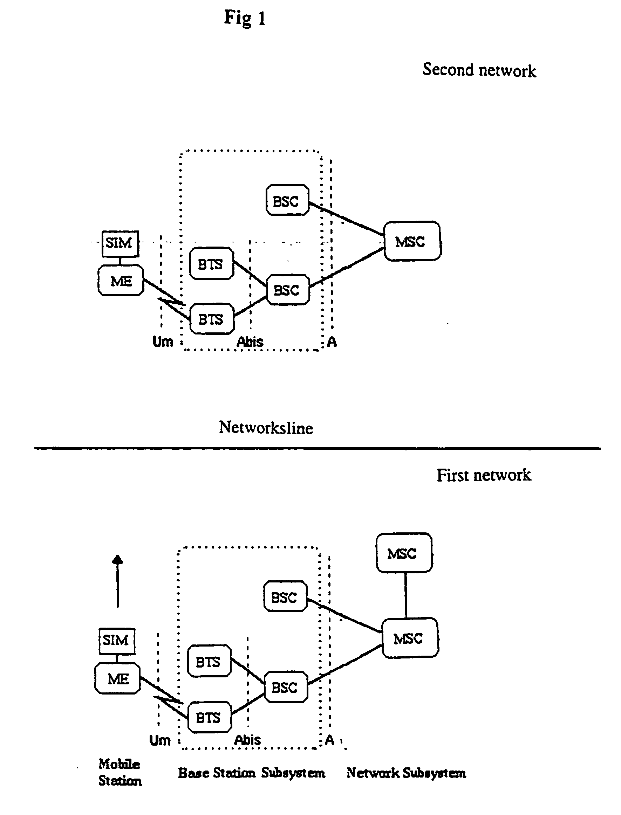

Figure 1 diagrammatically illustrates, in form of a block diagram, a communication system according to the invention.

In order to facilitate an understanding of the present invention a glossary of terms used in this patent specification is provided below:
- PLMN: Public Land Mobile Network (GSM Network)
- MSC: Mobile services Switching Centre
- MS: Mobile station
- SIM: Subscriber Identity Module
- BTS: Base Transceiver Station
- BSC: Base Station Controller
- HLR: Home Location Register
- VLR: Visitor Location Register

As is diagrammatically illustrated in fig. 1, there is a communication system, a first mobile communication network, which is a GSM network, and a second communication network which also is a GSM network. In the system we have a mobile subscriber, which has a mobile telephone MS.

The different GSM-networks are operated by different telecommunication operators in the same or in different countries. All operators in one land have its own network, a "Public Land Mobile Network" (PLMN).
Both networks illustrated in the figure is composed of several equal functional entities but can be built by different manufactures. The GSM network can be divided into three broad parts. The Mobile Station is carried by the subscriber. The Base Station Subsystem controls the radio link with the Mobile Station. The Network Subsystem, the main part of which is the Mobile services Switching Center (MSC), performs the switching of calls between the mobile users, and between mobile and fixed network users. The MSC also handles the mobility management operations.
The mobile station (MS) consists of the mobile equipment (the terminal) and a smart card called the Subscriber Identity Module (SIM). The SIM provides personal mobility, so that the user can have access to subscribed services irrespective of a specific terminal.

The Base Station Subsystem is composed of two parts, the Base Transceiver Station (BTS) and the Base Station Controller (BSC). These communicate across the standardised Abis interface, allowing (as in the rest of the system) operation between components made by different suppliers.
The Base Transceiver Station houses the radio transceivers which define a cell and handle the radio-link protocols with the Mobile Station.
The Base Station Controller manages the radio resources for one or more BTSs. It handles radio-channel setup, frequency hopping, and handovers. The BSC is the connection between the mobile station and the Mobile service Switching Center (MSC).

The central component of the Network Subsystem is the Mobile services Switching Center (MSC). It acts like a normal switching node of the PSTN or ISDN, and additionally provides all the functionality needed to handle a mobile subscriber, such as registration, authentication, location updating, handovers within the PLMN, and call routing to a roaming subscriber. These services are provided in conjuction with several functional entities, which together form the Network Subsystem. The MSC provides the connection to the fixed networks (such as the PSTN or ISDN). Signalling between functional entities in the Network Subsystem uses Signalling System Number 7 (SS7), used for trunk signalling in ISDN and widely used in.current public networks.
The Home Location Register (HLR) and Visitor Location Register (VLR), together with the MSC, provide the call-routing and roaming capabilities of GSM. The HLR contains all the administrative information of each subscriber registered in the corresponding GSM network, along with the current location of the mobile. The location of the mobile is typically in the form of the signalling address of the VLR associated with the mobile station. There is logically one HLR per GSM network, although it may be implemented as a distributed database.

The Visitor Location Register (VLR) contains selected administrative information from the HLR, necessary for call control and provision of the subscribed services, for each mobile currently located in the geographical area controlled by the VLR. Although each functional entity can be implemented as an independent unit, all manufacturers of switching equipment to date implement the VLR together with the MSC, so that the geographical area controlled by the MSC corresponds to that controlled by the VLR, thus simplifying the signalling required. MSC contains no information about particular mobile stations this information is stored in the location registers.
Two other registers are used for authentication and security purposes. The Equipment Identity Register (EIR) is a database that contains a list of all valid mobile equipment on the network, where each mobile station is identified by its International Mobile Equipment Identity (IMEI). In a cellular network, the radio and fixed links required are not permanently allocated for the duration of a call.
Handover, is the switching of an on-going call to a different channel or cell.

There are four different types of handover in the GSM system, which involve transferring a call between:
- Channels (time slots) in the same cell
- Cells (Base Transceiver Stations) under the control of the same Base Station Controller (BSC),
- Cells under the control of different BSCs, but belonging to the same Mobile services Switching Center (MSC), and
- Cells under the control of different MSCs in a PLMN,

When a subscriber moves as illustrated in the direction of the arrow to the network line of the PLMN it is possibly that all types of handover will be performed.
The first two types of handover, called internal handovers, involve only one Base Station Controller (BSC). To save signalling bandwidth, they are managed by the BSC without involving the Mobile services Switching Center (MSC), except to notify it at the completion of the handover. The last two types of handover, called external handovers, are handled by the MSCs involved. An important aspect of GSM is that the original MSC, the *anchor MSC,* remains responsible for most call-related functions, with the exception of subsequent inter-BSC handovers under the control of the new MSC, called the *relay MSC.*
Handovers can be initiated by either the mobile or the MSC (as a means of traffic load balancing). During its idle time slots, the mobile scans the Broadcast Control Channel of up to 16 neighbouring cells, and forms a list of the six best candidates for possible handover, based on the received signal strength. This information is passed to the BSC and MSC, at least once per second, and is used by the handover algorithm.
The algorithm for when a handover decision should be taken is not specified in the GSM recommendations. There are two basic algorithms used, both closely tied in with power control. This is because the BSC usually does not know whether the poor signal quality is due to multipath fading or to the mobile having moved to another cell. This is especially true in small urban cells. The handover in a PLMN is the necessary overhead in order to switch the call to a new cell site without either interrupting the call or alerting the user.

The handover procedure between two PLMN and their co-operation with the involved networks are described in the following. Because of the fact that two different operators' networks are involved, the handover between them will always be between the switching centres (MSCS) of the two networks. The connection between the switching centres (MSCs) is a normal telephony network connection.
In the network subsystem preferably in the MSC, there is situated a means adapted to transmit calls between these both network and this means includes an arrangement for collecting specific parameters (such as frequencies) corresponding to the cells which are situated near the networksline in the communication system. Said means can be a telecommunicationcomputor which automatically reads the information at specific time intervals or it can be manually given. Said arrangement can also be a database on each side of the network line and connected to each other and respective MSC.

The information received from this arrangement and corresponding information from the first network, serves as input for the handover procedure, which is basically the same as the handover procedure between two MSC which are situated in one PLMN.

In the network is also situated an arrangement for notifying in real time the subscriber, when he is still talking in the MS, that the transmission of the call to another PLMN is effected. The arrangement is adapted to receive information from the handover procedure so that it can give the subscriber an audible signal such as a special tone or a message that the transmission to the other network is performed. If there are different tariffs in the PLMNs, the subscriber is then informed that the tariff has changed.

After the handover the reley station (MSC) takes care of the radio resources and when required performs handovers internal to the switching centre.

One of the basic characteristics of the interexchange handover is that the control of the connection (e.g, services, charging) stays in the switching centre, where the initial call set-up was performed and is not moved to another switching centre with the handover.

The arrangement for notifying the customer that a transmission is performed also gives information to the existing billing arrangment in each network that a handover has been performed. The billing arrangment then produces bills according to the operator's implementation of the new service, which can have the name "Seamless roaming".

## Claims

1. A communication system, including two mobile communication networks, which are adapted for the transmission of a call from a first mobile communication network to a second mobile communication network, including mobile customers with mobile stations, MS, said system comprising a transmission means adapted to transmit calls between these both mobile communication networks while a conversation is in progress, each of said networks comprising at least one switching centre, MSC, and said networks are operated by different telecommunication operators with their own Public Land Mobile. Network, PLMN, said transmission being adapted to not losing ongoing calls when a customer with a mobile station, MS, passes into another operators Public Land Mobile Network, PLMN, **characterized in that** each switching centre, MSC, comprises an arrangement for collecting specific parameters corresponding to the cells, situated near the network line, and transmitting the collected parameters to said transmission means for use at a handover procedure between the two networks, and **in that** the switching centre, MSC, of each network is adapted in such a way that the handover procedure is controlled by the switching centre **in that** network, where the original switching of the call is performed, and that the control of the handover procedure stays **in that** switching centre during the handover procedure.

2. A communication system, as claimed in claim 1 **characterised in that** the transmission means includes an arrangement for notifying, in real time, a customer that a transmission to another PLMN is effected.

3. A communication system, as claimed in claim 2 **characterised in that** the notifying is performed by an audible signal such as a special tone, or a message that the transmission to the other network has been performed.

4. A communication system, as claimed in claim 3 **characterised in that** the message is viewed on the display of a mobile telephone.

5. A communication system, as claimed in claim 3 **characterised in that** the arrangement for notifying gives the existing billing arrangement in both co-operating network information that a transmission of a call has been performed.

6. A communication system, as claimed in claim 1 **characterised in that** said specific parameters are cell information from the second network.

7. A communication system, as claimed in any of claims 1-6 **characterised in** the transmission functionality of the system may be used as a service both in national and international roaming.

## Patentansprüche

1. Kommunikationssystem, das zwei mobile Kommunikationsnetze einschließt, die für die Übertragung eines Rufs von einem ersten mobilen Kommunikationsnetz zu einem zweiten mobilen Kommunikationsnetz ausgebildet sind, einschließlich mobilen Kunden mit mobilen Stationen, MS, welches System Übertragungsmittel aufweist, die dazu ausgebildet sind, Rufe zwischen diesen beiden mobilen Kommunikationsnetzen zu übertrag gen, während eine Konversation stattfindet, wobei jedes der Netze wenigstens ein Vermittlungszentrum, MSC, aufweist und die Netzwerke durch unterschiedliche Telekommunikationsbetreiber mit ihrem eigenen öffentlichen Mobilfunknetz, PLMN, betrieben werden, wobei die Übertragung dazu ausgebildet ist, fortdauernde Rufe nicht zu verlieren, wenn ein Kunde mit einer mobilen Station, MS, in das öffentliche Mobilfunknetz, PLMN, eines anderen Betreibers gelangt, **dadurch gekennzeichnet, dass** jedes Vermittlungszentrum, MSC, eine Anordnung zum Sammeln von besonderen Parametern, die den Zellen entsprechen, die nahe der Netzlinie oder -leitung angeordnet sind, und zum Übertragen der gesammelten Parameter zu den Übertragungsmitteln für Benutzung bei einer Übergabeprozedur zwischen den beiden Netzen aufweist, und dass das Vermittlungszentrum, MSC, jedes Netzes auf solche Weise ausgebildet ist, dass die Übergabeprosedur durch das Vermittlungszentrum in demjenigen Netz gesteuert wird, wo die ursprüngliche Vermittlung des Rufes durchgeführt worden ist, und dass die Steuerung der Übergabeprozedur in diesem Vermittlungszentrum während der Übergabeprozedur verbleibt.

2. Kommunikationssystem nach Anspruch 1, **dadurch gekennzeichnet, dass** die Übertragungsniittel eine Anordnung einschließen, um in Echtzeit einen Kunden zu benachrichtigen, dass eine Übertragung zu einem anderen PLMN bewirkt wird.

3. Kommunikationssystem nach Anspruch 2, **dadurch gekennzeichnet, dass** die Benachrichtigung durch ein hörbares Signal wie z.B, einen besonderen Ton oder eine Meldung erfolgt, dass die Übertragung zu dem anderen Netz durchgeführt worden ist.

4. Kommunikationssystem nach Anspruch 3, **dadurch gekennzeichnet, dass** die Meldung auf der Anzeige eines mobilen Telefons betrachtet wird,

5. Kommunikationssystem nach Anspruch 3, **dadurch gekennzeichnet, dass** die Anordnung für Benachrichtigung der existierenden Rechnungsstellugsanordnung in beiden zusammenarbeitenden Netzen Information gibt, dass eine Übertragung eines Rufes durchgeführt worden ist.

6. Kommunikationssystem nach Anspruch 1, **dadurch gekennzeichnet, dass** die besonderen Parameter Zelleninformation vom zweiten Netz sind.

7. Kommunikationssystem nach einem der Ansprüche 1 bis 6, **dadurch gekennzeichnet, dass** die Übertragungsfunktionalität des Systems als ein Dienst sowohl bei nationalem als auch internationalem Roaming benutzt werden kann.

## Revendications

1. Système de communication, comportant deux réseaux de communication mobiles, qui sont adaptés pour la transmission d'un appel à partir d'un premier réseau de communication mobile vers un second réseau de communication mobile, comportant des clients mobiles avec des stations mobiles, MS, ledit système comprenant des moyens de transmission adaptés afin de transmettre des appels entre ces deux réseaux de communication mobiles pendant qu'une conversation est en cours, chacun desdits réseaux comprenant au moins un centre de commutation, MSC, et lesdits réseaux sont commandés par différents opérateurs de télécommunication avec leur propre réseau mobile public, PLMN, ladite transmission étant adaptée afin de ne pas perdre d'appels sortant lorsqu'un client avec une station mobile, MS, passe sur un autre réseau mobile public, PLMN, d'opérateurs, **caractérisé en ce que** chaque centre de commutation, MSC, comprend un agencement de collecte de paramètres spécifiques correspondant aux cellules, situé à proximité de la ligne de réseau, et transmettant les paramètres collectés audits moyens de transmission en vue d'une utilisation au cours d'une procédure de passage de consignes entre les deux réseaux, et **en ce que** le centre de commutation, MSC, de chaque réseau est adapté de telle manière que la procédure de passage de consignes est commandée par le centre de commutation du réseau dans lequel la commutation initiale de l'appel a été réalisée, et **en ce que** la commande de la procédure de passage de consignes reste dans ce centre commutation au cours de la procédure de passage de consignes.

2. Système de communication selon la revendication 1, **caractérisé en ce que** les moyens de transmission comportent un agencement destiné à notifier, en temps réel, à un client qu'une transmission vers un autre PLMN est exécutée.

3. Système de communication selon la revendication 2, **caractérise en ce que** la notification est exécutée par un signal audible tel qu'une tonalité spéciale, ou par un message notifiant que la transmission vers l'autre réseau est exécutée.

4. Système de communication selon la revendication 3 **caractérisé en ce que** le message est visualisé sur l'écran d'affichage d'un téléphone mobile.

5. Système de communication selon la revendication 3, **caractérise en ce que** l'agencement de notification communique à l'agencement de facturation existant sur les deux réseaux coopérants des informations sur le fait qu'une transmission d'un appel a été exécutée.

6. Système de communication selon la revendication 1, **caractérisé en ce que** lesdits paramètres spécifiques sont des informations de cellule à partir du second réseau.

7. Système de communication selon l'une quelconque des revendications 1 à 6, **caractérisé en ce que** les fonctionnalités de transmission du système peuvent être utilisées comme un service à la fois pour le transfert de communication en national et en international.
